# EUROPÄISCHE PATENTSCHRIFT

(11) **EP 3 158 407 B1**
(45) Veröffentlichungstag und Bekanntmachung des Hinweises auf die Patenterteilung: **04.03.2020**
(21) Anmeldenummer: 15728500.8
(22) Anmeldetag: 10.06.2015
(51) Int. Cl.: G05B 19/042

(54) **PARAMETRISIERBARES AUTOMATISIERUNGSTECHNIKGERÄT**
PARAMETERIZABLE AUTOMATION TECHNOLOGY DEVICE
APPAREIL TECHNIQUE D'AUTOMATISATION PARAMÉTRABLE

(30) Priorität: 18.06.2014 DE 102014108586
(43) Veröffentlichungstag der Anmeldung: 26.04.2017
(73) Patentinhaber: Phoenix Contact GmbH & Co. KG, 32825 Blomberg (DE)
(72) Erfinder: HENKEL, Hartmut, 32825 Blomberg (DE); ZEUCH, Jochen, 32825 Blomberg (DE); SCHWEER, Patrick, 31785 Hameln (DE)
(74) Vertreter: Patentship Patentanwaltsgesellschaft mbH
(86) Internationale Anmeldenummer: PCT/EP2015/062905
(87) Internationale Veröffentlichungsnummer: WO 2015/193145

(56) Entgegenhaltungen:
- EP-A2- 1 571 511
- WO-A1-2014/063195
- DE-A1- 10 340 621
- US-A1- 2006 145 890
- US-A1- 2012 236 769

## Beschreibung

Die vorliegende Erfindung betrifft ein parametrisierbares Automatisierungstechnikgerät.

Ein parametrisierbares Automatisierungstechnikgerät kann eine Vielzahl von aktualisierbaren Geräteparametern aufweisen. Beispielsweise weist ein Spannungsversorgungsgerät häufig eine aktualisierbare bzw. einstellbare Ausgangsspannung auf. Zur Aktualisierung eines Geräteparameters des parametrisierbaren Automatisierungstechnikgerätes wird häufig ein Kommunikationsgerät verwendet, welches aufwändig mittels einer Drahtleitung mit einer kontaktbehafteten Kommunikationsschnittstelle des parametrisierbaren Automatisierungstechnikgerätes verbunden wird. Insbesondere bei einer Aktualisierung von Geräteparametern einer Vielzahl von parametrisierbaren Automatisierungstechnikgeräten kann ein Herstellen einer drahtgebundenen Verbindung zum Aktualisieren der Geräteparameter als unkomfortabel empfunden werden sowie kostenintensiv sein.

Die EP 1571 511 A2 offenbart einen Frequenzwandler und ein Gerät zum Konfigurieren des Frequenzumwandlers.

Die DE 103 40 621 A1 offenbart ein Verfahren zum Bedienen eines Umrichters für einen elektrischen Antrieb oder Generator.

Die WO 2014 / 063195 A1 offenbart ein System und ein Verfahren zum Austausch von Daten mit einem Gerät ohne physikalische Benutzerschnittstelle.

Die US 2006 / 0145890 A1 offenbart einen Verbrauchszähler mit einem signalgesteuerten Sender-Empfangsgerät.

Die US 2012 / 0236769 A1 offenbart eine Schnittstelle für eine lokale Konfiguration und Überwachung eines industriellen Feldgeräts.

Es ist die der Erfindung zugrundeliegende Aufgabe, ein effizientes Konzept zur Aktualisierung eines Geräteparameters eines parametrisierbaren Automatisierungstechnikgerätes anzugeben.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.
Gemäß einem ersten Aspekt der Erfindung wird die Aufgabe durch ein parametrisierbares Automatisierungstechnikgerät gemäß Anspruch 1 gelöst. Dadurch wird der Vorteil erreicht, dass ein Geräteparameter des parametrisierbares Automatisierungstechnikgerätes effizient aktualisiert werden kann.
Das parametrisierbare Automatisierungstechnikgerät kann ein Spannungsversorgungsgerät, ein Stromversorgungsgerät, ein Verstärker, insbesondere ein Messverstärker, ein Trennschalter, ein Aktor oder ein Sensor sein. Gemäß einer Ausführungsform kann das Automatisierungstechnikgerät ein elektrisches Gerät sein.
Der Geräteparameter kann eine Ausgangsspannung, einen Ausgangsstrom, einen Verstärkungsfaktor und/oder einen Schaltzustand umfassen. Ferner können die Aktualisierungsdaten einen Sollwert für den vorgespeicherten Geräteparameter umfassen und/oder in Form einer Bitfolge vorliegen. Die Aktualisierungsdaten können ferner mittels eines Kommunikationsgerätes, wie eines Computers oder eines Mobiltelefons, an das parametrisierbare Automatisierungstechnikgerät übermittelt werden. Gemäß einer Ausführungsform können die empfangenen Aktualisierungsdaten in dem Speicher gespeichert werden. Ferner kann der Prozessor ausgebildet sein, die gespeicherten Aktualisierungsdaten aus dem Speicher auszulesen und den vorgespeicherten Geräteparameter auf der Basis der ausgelesenen Aktualisierungsdaten zu aktualisieren.
Der Speicher kann einen elektrisch löschbaren programmierbaren Nur-Lese-Speicher, beispielsweise einen Electrically-Erasable-Programmable-Read-Only-Memory (EEPROM) Speicher, umfassen. Ferner ist der Speicher in eine Datenpartition und eine Kommunikationspartition partitioniert. In der Datenpartition können der vorgespeicherte Geräteparameter, der aktualisierte Geräteparameter und/oder die Aktualisierungsdaten gespeichert werden. Ferner kann in der Kommunikationspartition eine Information über ein Empfangen der Aktualisierungsdaten gespeichert werden, beispielsweise in der Form eines oder einer Mehrzahl von Kommunikations-Bytes.
Die drahtlose Kommunikationsschnittstelle kann eine Radiofrequenzidentifikationsschnittstelle zur Kommunikation mittels Radio-Frequency-Identification (RFID), beispielsweise nach dem Standard ISO/IEC 14443 oder ISO/IEC 18000-3, sein. Ferner kann die drahtlose Kommunikationsschnittstelle eine Nahfeldkommunikationsschnittstelle zur Kommunikation mittels Near-Field-Communication (NFC), beispielsweise nach dem Standard ISO/IEC 14443 oder ISO/IEC 18092, sein. Die drahtlose Kommunikationsschnittstelle kann ferner zur Kommunikation nach dem Standard Bluetooth, ZigBee oder Wireless Local Area Network (W-LAN) ausgebildet sein. Ferner kann die drahtlose Kommunikationsschnittstelle mit dem Speicher direkt verbunden sein. Beispielsweise bilden die drahtlose Kommunikationsschnittstelle und der Speicher einen Nahfeldkommunikationsspeicher oder ein NFC-EEPROM.
Das Kommunikationsnetzwerk kann ein Funknetzwerk, beispielsweise ein Nahfeldkommunikationsnetzwerk, ein Telefonnetzwerk, beispielsweise ein Mobilfunknetzwerk, ein Computernetzwerk, beispielsweise ein Wireless Local Area Network, und/oder das Internet sein.
Der Prozessor kann in einem Mikroprozessor umfasst sein oder einen Mikroprozessor bilden. Ferner kann der Prozessor mit dem Speicher über eine serielle Schnittstelle, beispielsweise nach einem der Standards Serial Peripheral Interface (SPI) oder Inter-Integrated Circuit (12C), verbunden sein. Der Prozessor ist ferner ausgebildet ein Empfangen der Aktualisierungsdaten durch ein Auslesen der Information über ein Empfangen der Aktualisierungsdaten aus der Kommunikationspartition des Speichers zu erkennen. Beispielsweise ist die Information in Form eines Bits in der Kommunikationspartition gespeichert. Ist das Bit auf 0 gesetzt, so liegen keine Aktualisierungsdaten vor. Ist das Bit hingegen auf 1 gesetzt, so liegen Aktualisierungsdaten vor. Ferner ist der Prozessor ausgebildet, die in der Kommunikationspartition gespeicherte Information über ein Empfangen der Aktualisierungsdaten zu löschen oder zu überschreiben. Beispielsweise löscht der Prozessor die Information nach der Aktualisierung des vorgespeicherten Geräteparameters.
Der Prozessor kann ausgebildet sein, den aktualisierten Geräteparameter einzustellen, um den Betrieb des parametrierbaren Automatisierungstechnikgerätes einzustellen.
Beispielsweise ist das parametrisierbare Automatisierungstechnikgerät ein Spannungsversorgungsgerät und der Geräteparameter ist eine Ausgangsspannung des Spannungsversorgungsgerätes. Zum Einstellen des Betriebs des Spannungsversorgungsgerätes stellt hier der Prozessor eine Ausgangsspannung des Spannungsversorgungsgerätes auf den in dem aktualisierten Geräteparameter umfassten Sollwert für die Ausgangsspannung ein.

Gemäß einer Ausführungsform kann der Prozessor ausgebildet sein, den in dem Speicher vorgespeicherte Geräteparameter durch den aktualisierten Geräteparameter zu ersetzen oder mit dem aktualisierten Geräteparameter zu überschreiben.

Gemäß einer weiteren Ausführungsform können die drahtlose Kommunikationsschnittstelle und/oder der Speicher zum Empfangen der Aktualisierungsdaten drahtlos mit elektrischer Energie versorgt und die empfangenen Aktualisierungsdaten in dem Speicher gespeichert werden. Hierbei kann das parametrisierbare Automatisierungstechnikgerät deaktiviert sein. Insbesondere kann hierbei das parametrisierbare Automatisierungstechnikgerät in einer Umverpackung, wie einem Karton, verpackt oder aus einem Schaltschrank ausgebaut sein. Ferner kann der Prozessor ausgebildet sein, die in der Kommunikationspartition gespeicherte Information über ein Empfangen der Aktualisierungsdaten bei einer Aktivierung des parametrisierbaren Automatisierungstechnikgerätes auszulesen und gegebenenfalls den vorgespeicherten Geräteparameter zu aktualisieren.

Durch das Überprüfen der empfangenen Aktualisierungsdaten auf Datenübermittlungsfehler und das Verwerfen dere empfangenen Aktualisierungsdaten bei Vorliegen eines Datenübermittlungsfehlers wird der Vorteil erreicht, dass eine Fehleinstellung des parametrisierbaren Automatisierungstechnikgerätes vermieden werden kann.

Der Prozessor kann ausgebildet sein, einen in den Aktualisierungsdaten umfassten Geräteparameter auf Unterschreiten eines ersten Schwellwertes und/oder auf Überschreiten eines zweiten Schwellwertes zu überprüfen, um die empfangenen Aktualisierungsdaten auf Datenübermittlungsfehler zu überprüfen. Ferner kann der Geräteparameter mehrfach in den Aktualisierungsdaten umfasst sein und der Prozessor kann ferner ausgebildet sein, einen Datenübermittlungsfehler durch Vergleichen der Werte des mehrfach gespeicherten Geräteparameters zu erfassen. Der Prozessor kann ferner ausgebildet sein, den in den Aktualisierungsdaten umfassten Geräteparameter auf Widerspruch mit einem vorgespeicherten weiteren Geräteparameter zu überprüfen, um die empfangenen Aktualisierungsdaten auf Datenübermittlungsfehler zu überprüfen.

Der Prozessor kann ferner ausgebildet sein, die Aktualisierungsdaten zu löschen, um die Aktualisierungsdaten zu verwerfen. Ferner kann der Prozessor ausgebildet sein, die in der Kommunikationspartition gespeicherte Information über das Empfangen der Aktualisierungsdaten zu löschen oder zu überschreiben, um die Aktualisierungsdaten zu verwerfen.

Gemäß einer Ausführungsform kann die Überprüfung der Aktualisierungsdaten auf Datenübermittlungsfehler ferner einem Manipulationsschutz entsprechen oder einen Manipulationsschutz bereitstellen.

Gemäß einer Ausführungsform kann der Prozessor ausgebildet sein, die empfangenen Aktualisierungsdaten bei einer Aktivierung des parametrisierbaren Automatisierungstechnikgerätes auf Datenübermittlungsfehler zu überprüfen, beispielsweise nachfolgend dem Auslesen der in der Kommunikationspartition gespeicherten Information über ein Empfangen der Aktualisierungsdaten bei einer Aktivierung des parametrisierbaren Automatisierungstechnikgerätes.

In einer weiteren vorteilhaften Ausführungsform des parametrisierbaren Automatisierungstechnikgerätes ist der Prozessor ferner ausgebildet, die empfangenen Aktualisierungsdaten auf der Basis einer Prüfsumme auf Datenübermittlungsfehler zu überprüfen, und die empfangenen Aktualisierungsdaten bei Vorliegen eines Datenübermittlungsfehlers zu verwerfen. Dadurch wird der Vorteil erreicht, dass ein Datenübermittlungsfehler effizient erkannt werden kann.

Die Aktualisierungsdaten und/oder der Geräteparameter können mittels einer zyklischen Redundanzprüfung, beispielsweise nach dem Standard Cyclic Redundancy Check 8 (CRC-8), auf Datenübermittlungsfehler überprüft werden.

In einer weiteren vorteilhaften Ausführungsform des parametrisierbaren Automatisierungstechnikgerätes ist der Prozessor ferner ausgebildet, die empfangenen Aktualisierungsdaten durch Entschlüsselung der empfangenen Aktualisierungsdaten auf eine Zugriffsberechtigung zu überprüfen, und die empfangenen Aktualisierungsdaten bei fehlender Zugriffsberechtigung zu verwerfen. Dadurch wird der Vorteil erreicht, dass ein effizienter Zugriffsschutz für die Aktualisierung des vorgespeicherten Geräteparameters bereitgestellt werden kann.

Die Aktualisierungsdaten können durch eine XOR-Verschlüsselung eines Geräteparameters mit einem vorbestimmten Schlüssel erzeugt werden. Der Prozessor kann ferner ausgebildet sein, den Geräteparameter mittels einer XOR-Entschlüsselung mit dem vorbestimmten Schlüssel zu entschlüsseln und den vorgespeicherten Geräteparameter mit dem entschlüsselten Geräteparameter zu ersetzen, um den vorgespeicherten Geräteparameter zu aktualisieren.

In einer weiteren vorteilhaften Ausführungsform des parametrisierbaren Automatisierungstechnikgerätes ist der Prozessor ferner ausgebildet, eine Information über eine fehlende Zugriffsberechtigung in dem Speicher zu speichern. Dadurch wird der Vorteil erreicht, dass eine fehlende Zugriffsberechtigung dokumentiert und zu einem späteren Zeitpunkt abgerufen werden kann.

In einer weiteren vorteilhaften Ausführungsform des parametrisierbaren Automatisierungstechnikgerätes ist der Prozessor ferner ausgebildet, eine Information über einen vorliegenden Datenübermittlungsfehler in dem Speicher zu speichern. Dadurch wird der Vorteil erreicht, dass eine Überprüfung der Ursache eines vorliegenden Datenübertragungsfehlers zu einem späteren Zeitpunkt durchgeführt werden kann.

Die Information kann in der Kommunikationspartition des Speichers gespeichert werden, beispielsweise in der Form eines oder einer Mehrzahl von Kommunikations-Bytes. Ferner kann in der Information eine Fehlerart, wie Unterschreiten eines Schwellwertes durch den in den Aktualisierungsdaten umfassten weiteren Geräteparameter, oder eine Fehleradresse umfasst sein. Die Information kann ferner angeben, dass kein Datenübermittlungsfehler vorliegt. Gemäß einer Ausführungsform kann die Information die Aktualisierungsdaten umfassen.

Gemäß einer Ausführungsform kann mittels der Information ferner eine erfolgreiche Aktualisierung des vorgespeicherten Geräteparameters oder eine gültige Übernahme der Aktualisierungsdaten signalisiert werden.

In einer weiteren vorteilhaften Ausführungsform des parametrisierbaren Automatisierungstechnikgerätes ist die drahtlose Kommunikationsschnittstelle ausgebildet, eine Information über einen vorliegenden Datenübermittlungsfehler über das Kommunikationsnetzwerk auszusenden oder für ein Auslesen bereitzustellen. Dadurch wird der Vorteil erreicht, dass die Information an ein Kommunikationsgerät zur Aktualisierung des Geräteparameters des parametrisierbaren Automatisierungstechnikgerätes übermittelt werden kann.

In einer weiteren vorteilhaften Ausführungsform des parametrisierbaren Automatisierungstechnikgerätes ist das parametrisierbare Automatisierungstechnikgerät eines der folgenden Automatisierungstechnikgeräte: ein Spannungsversorgungsgerät, ein Stromversorgungsgerät, ein Verstärker, insbesondere ein Messverstärker, ein Trennschalter, ein Aktor oder ein Sensor.

In einer weiteren vorteilhaften Ausführungsform des parametrisierbaren Automatisierungstechnikgerätes umfasst der Geräteparameter einen oder mehrere der folgenden Geräteparameter: eine Ausgangsspannung, einen Ausgangsstrom, einen Verstärkungsfaktor oder einen Schaltzustand.

Beispielsweise beträgt die Ausgangsspannung 1V, 5V, 10V, 12V, 24V, 50V, 100V, 500V 1kV, 2kV oder 5kV. Ferner kann der Ausgansstrom 0,01 mA, 1mA, 10mA, 100mA, 1A, 5A oder 10A betragen. Der Verstärkungsfaktor kann ferner 1,01, 1,1, 1,5, 2, 5, 10, 25, 50, 100, 500 oder 1000 betragen. Ferner kann der Schaltzustand geöffnet oder geschlossen sein.

In einer weiteren vorteilhaften Ausführungsform des parametrisierbaren Automatisierungstechnikgerätes ist die drahtlose Kommunikationsschnittstelle ferner ausgebildet, eine Kennung des parametrisierbaren Automatisierungstechnikgerätes über das Kommunikationsnetzwerk an ein Kommunikationsgerät auszusenden. Dadurch wird der Vorteil erreicht, dass das Kommunikationsgerät das parametrisierbare Automatisierungstechnikgerät mittels der Kennung eindeutig identifizieren kann.

Die Kennung kann eine Seriennummer des parametrisierbaren Automatisierungstechnikgerätes umfassen. Ferner kann das Kommunikationsgerät ein Programmiergerät zum Aktualisieren des vorgespeicherten Geräteparameters des parametrisierbaren Automatisierungstechnikgerätes, beispielsweise ein Computer, ein Mobiltelefon oder ein Smartphone, sein.

In einer weiteren vorteilhaften Ausführungsform des parametrisierbaren Automatisierungstechnikgerätes ist die drahtlose Kommunikationsschnittstelle drahtlos mit elektrischer Energie versorgbar. Dadurch wird der Vorteil erreicht, dass die Aktualisierungsdaten in einem deaktivierten Zustand des parametrisierbaren Automatisierungstechnikgerätes empfangen werden können.

In einer weiteren vorteilhaften Ausführungsform des parametrisierbaren Automatisierungstechnikgerätes ist die drahtlose Kommunikationsschnittstelle ferner ausgebildet, den Speicher mit elektrischer Energie zu versorgen. Dadurch wird der Vorteil erreicht, dass die Aktualisierungsdaten in einem deaktivierten Zustand des parametrisierbaren Automatisierungstechnikgerätes empfangen und in dem Speicher gespeichert werden können.

In einer weiteren vorteilhaften Ausführungsform des parametrisierbaren Automatisierungstechnikgerätes umfasst die drahtlose Kommunikationsschnittstelle eine Nahfeldkommunikationsschnittstelle. Dadurch wird der Vorteil erreicht, dass eine effiziente und drahtlos mit elektrischer Energie versorgbare drahtlose Kommunikationsschnittstelle verwendet werden kann.

Die Nahfeldkommunikationsschnittstelle kann zur Kommunikation mittels Near-Field-Communication (NFC), beispielsweise nach dem Standard ISO/IEC 14443 oder ISO/IEC 18092, ausgebildet sein.

In einer weiteren vorteilhaften Ausführungsform des parametrisierbaren Automatisierungstechnikgerätes ist die drahtlose Kommunikationsschnittstelle innerhalb eines Gehäuses des parametrisierbaren Automatisierungstechnikgerätes oder in einer Wandung des Gehäuses des parametrisierbaren Automatisierungstechnikgerätes angeordnet. Dadurch wird der Vorteil erreicht, dass die drahtlose Kommunikationsschnittstelle platzsparend in das parametrisierbare Automatisierungstechnikgerät integriert werden kann.

In einer weiteren vorteilhaften Ausführungsform des parametrisierbaren Automatisierungstechnikgerätes umfasst die drahtlose Kommunikationsschnittstelle eine Antenne, welche innerhalb eines Gehäuses des parametrisierbaren Automatisierungstechnikgerätes angeordnet oder in einer Wandung des Gehäuses des parametrisierbaren Automatisierungstechnikgerätes integriert ist. Dadurch wird der Vorteil erreicht, dass das parametrisierbare Automatisierungstechnikgerät eine besonders kompakte Bauform aufweisen kann.

Die Antenne kann durch Leiterbahnen auf einer Platine oder einer Leiterplatte gebildet sein. Ferner kann das Gehäuse ein Kunststoffgehäuse sein oder ein für elektromagnetische Signale durchlässiges Gehäuseelement umfassen.

Gemäß einem zweiten Aspekt der Erfindung wird die Aufgabe durch ein Verfahren zur Parametrierung eines parametrisierbaren Automatisierungstechnikgerätes gemäß Anspruch 12 gelöst.

Das Verfahren kann mittels des oben beschriebenen parametrisierbaren Automatisierungstechnikgerät und einem Kommunikationsgerät zum Übermitteln der Aktualisierungsdaten an das parametrisierbare Automatisierungstechnikgerät ausgeführt werden. Das Kommunikationsgerät kann ein Computer, ein Mobiltelefon oder ein Smartphone sein.

Durch das Überprüfen der empfangenen Aktualisierungsdaten auf Datenübermittlungsfehler; und Verwerfen der empfangenen Aktualisierungsdaten bei Vorliegen eines Datenübermittlungsfehlers wird der Vorteil erreicht, dass eine Fehleinstellung des parametrisierbaren Automatisierungstechnikgerätes vermieden werden kann.

In einer weiteren vorteilhaften Ausführungsform des Verfahrens umfasst das Verfahren ferner den Verfahrensschritt: Speichern einer Information über einen vorliegenden Datenübermittlungsfehler in einem Speicher des parametrisierbaren Automatisierungstechnikgerätes. Dadurch wird der Vorteil erreicht, dass eine Überprüfung der Ursache eines vorliegenden Datenübertragungsfehlers zu einem späteren Zeitpunkt durchgeführt werden kann.

Ausführungsbeispiele der Erfindung sind in den Zeichnungen dargestellt und werden im Folgenden näher beschrieben.

Es zeigen:
- Fig. 1: ein schematisches Diagramm eines parametrisierbaren Automatisierungstechnikgerätes gemäß einer Ausführungsform; und
- Fig. 2: ein schematisches Diagramm eines Verfahrens zur Parametrierung eines parametrisierbaren Automatisierungstechnikgerätes gemäß einer Ausführungsform.

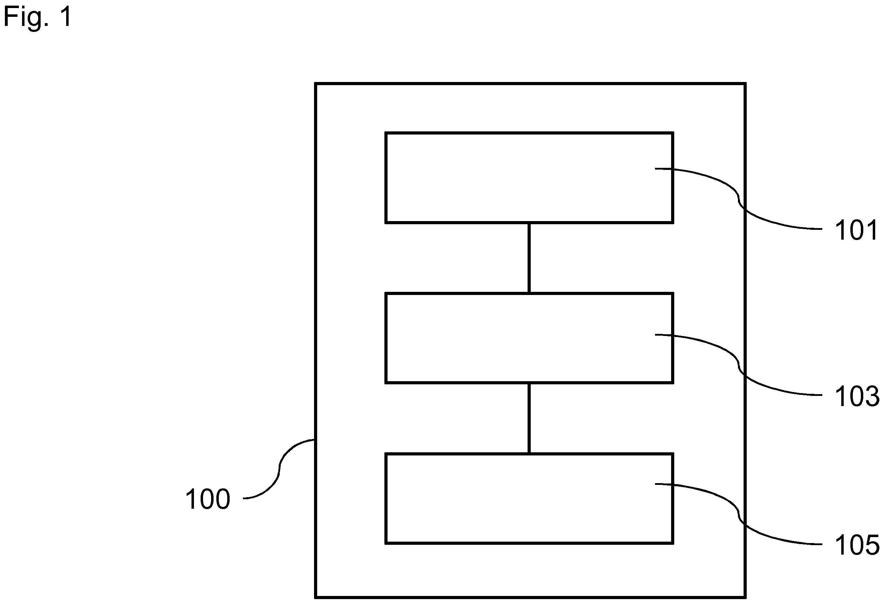

Fig. 1 zeigt ein schematisches Diagramm eines parametrisierbaren Automatisierungstechnikgerätes 100 gemäß einer Ausführungsform. Das parametrisierbare Automatisierungstechnikgerät 100 umfasst einen Speicher 101, eine drahtlose Kommunikationsschnittstelle 103 und einen Prozessor 105.

Das parametrisierbare Automatisierungstechnikgerät 100 kann ausgebildet sein mit: dem Speicher 101, in welchem ein Geräteparameter des parametrisierbaren Automatisierungstechnikgerätes 100 vorgespeichert ist; der drahtlosen Kommunikationsschnittstelle 103 zum Empfangen von Aktualisierungsdaten zur Aktualisierung des vorgespeicherten Geräteparameters über ein Kommunikationsnetzwerk; und dem Prozessor 105, welcher ausgebildet ist, den vorgespeicherten Geräteparameter auf der Basis der empfangenen Aktualisierungsdaten zu aktualisieren und einen Betrieb des parametrisierbaren Automatisierungstechnikgerätes 100 auf der Basis des aktualisierten Geräteparameters einzustellen.

Das parametrisierbare Automatisierungstechnikgerät 100 kann ein Spannungsversorgungsgerät, ein Stromversorgungsgerät, ein Verstärker, insbesondere ein Messverstärker, ein Trennschalter, ein Aktor oder ein Sensor sein. Gemäß einer Ausführungsform kann das Automatisierungstechnikgerät 100 ein elektrisches Gerät sein. Der Geräteparameter kann eine Ausgangsspannung, einen Ausgangsstrom, einen Verstärkungsfaktor und/oder einen Schaltzustand umfassen. Ferner können die Aktualisierungsdaten einen Sollwert für den vorgespeicherten Geräteparameter umfassen und/oder in Form einer Bitfolge vorliegen. Die Aktualisierungsdaten können ferner mittels eines Kommunikationsgerätes, wie eines Computers oder eines Mobiltelefons, an das parametrisierbare Automatisierungstechnikgerät 100 übermittelt werden. Gemäß einer Ausführungsform können die empfangenen Aktualisierungsdaten in dem Speicher 101 gespeichert werden. Ferner kann der Prozessor 105 ausgebildet sein, die gespeicherten Aktualisierungsdaten aus dem Speicher 101 auszulesen und den vorgespeicherten Geräteparameter auf der Basis der ausgelesenen Aktualisierungsdaten zu aktualisieren. Der Speicher 101 kann einen elektrisch löschbaren programmierbaren Nur-Lese-Speicher, beispielsweise einen Electrically-Erasable-Programmable-Read-Only-Memory (EEPROM) Speicher, umfassen. Ferner ist der Speicher 101 in eine Datenpartition und eine Kommunikationspartition partitioniert. In der Datenpartition können der vorgespeicherte Geräteparameter, der aktualisierte Geräteparameter und/oder die Aktualisierungsdaten gespeichert werden. Ferner kann in der Kommunikationspartition eine Information über ein Empfangen der Aktualisierungsdaten gespeichert werden, beispielsweise in der Form eines oder einer Mehrzahl von Kommunikations-Bytes.
Die drahtlose Kommunikationsschnittstelle 103 kann eine Radiofrequenzidentifikationsschnittstelle zur Kommunikation mittels Radio-Frequency-Identification (RFID), beispielsweise nach dem Standard ISO/IEC 14443 oder ISO/IEC 18000-3, sein. Ferner kann die drahtlose Kommunikationsschnittstelle 103 eine Nahfeldkommunikationsschnittstelle zur Kommunikation mittels Near-Field-Communication (NFC), beispielsweise nach dem Standard ISO/IEC 14443 oder ISO/IEC 18092, sein. Die drahtlose Kommunikationsschnittstelle 103 kann ferner zur Kommunikation nach dem Standard Bluetooth, ZigBee oder Wireless Local Area Network (W-LAN) ausgebildet sein. Ferner kann die drahtlose Kommunikationsschnittstelle 103 mit dem Speicher 101 direkt verbunden sein. Beispielsweise bilden die drahtlose Kommunikationsschnittstelle 103 und der Speicher 101 einen Nahfeldkommunikationsspeicher oder ein NFC-EEPROM.
Das Kommunikationsnetzwerk kann ein Funknetzwerk, beispielsweise ein Nahfeldkommunikationsnetzwerk, ein Telefonnetzwerk, beispielsweise ein Mobilfunknetzwerk, ein Computernetzwerk, beispielsweise ein Wireless Local Area Network, und/oder das Internet sein.
Der Prozessor 105 kann in einem Mikroprozessor umfasst sein oder einen Mikroprozessor bilden. Ferner kann der Prozessor 105 mit dem Speicher über eine serielle Schnittstelle, beispielsweise nach einem der Standards Serial Peripheral Interface (SPI) oder Inter-Integrated Circuit (I²C), verbunden sein. Der Prozessor 105 ist ferner ausgebildet, ein Empfangen der Aktualisierungsdaten durch ein Auslesen der Information über ein Empfangen der Aktualisierungsdaten aus der Kommunikationspartition des Speichers 101 zu erkennen. Beispielsweise ist die Information in Form eines Bits in der Kommunikationspartition gespeichert. Ist das Bit auf 0 gesetzt, so liegen keine Aktualisierungsdaten vor. Ist das Bit hingegen auf 1 gesetzt, so liegen Aktualisierungsdaten vor. Ferner ist der Prozessor 105 ausgebildet, die in der Kommunikationspartition gespeicherte Information über ein Empfangen der Aktualisierungsdaten zu löschen oder zu überschreiben. Beispielsweise löscht der Prozessor 105 die Information nach der Aktualisierung des vorgespeicherten Geräteparameters.

Der Prozessor 105 kann ausgebildet sein, den aktualisierten Geräteparameter einzustellen, um den Betrieb des parametrierbaren Automatisierungstechnikgerätes 100 einzustellen. Beispielsweise ist das parametrisierbare Automatisierungstechnikgerät 100 ein Spannungsversorgungsgerät und der Geräteparameter ist eine Ausgangsspannung des Spannungsversorgungsgerätes. Zum Einstellen des Betriebs des Spannungsversorgungsgerätes stellt hier der Prozessor 105 eine Ausgangsspannung des Spannungsversorgungsgerätes auf den in dem aktualisierten Geräteparameter umfassten Sollwert für die Ausgangsspannung ein.

Gemäß einer Ausführungsform kann der Prozessor 105 ausgebildet sein, den in dem Speicher 101 vorgespeicherte Geräteparameter durch den aktualisierten Geräteparameter zu ersetzen oder mit dem aktualisierten Geräteparameter zu überschreiben.

Gemäß einer weiteren Ausführungsform können die drahtlose Kommunikationsschnittstelle 103 und/oder der Speicher 101 zum Empfangen der Aktualisierungsdaten drahtlos mit elektrischer Energie versorgt und die empfangenen Aktualisierungsdaten in dem Speicher 101 gespeichert werden. Hierbei kann das parametrisierbare Automatisierungstechnikgerät 100 deaktiviert sein. Insbesondere kann hierbei das parametrisierbare Automatisierungstechnikgerät 100 in einer Umverpackung, wie einem Karton, verpackt oder aus einem Schaltschrank ausgebaut sein. Ferner kann der Prozessor 105 ausgebildet sein, die in der Kommunikationspartition gespeicherte Information über ein Empfangen der Aktualisierungsdaten bei einer Aktivierung des parametrisierbaren Automatisierungstechnikgerätes 100 auszulesen und gegebenenfalls den vorgespeicherten Geräteparameter zu aktualisieren.

Gemäß einer weiteren Ausführungsform können die Aktualisierungsdaten für das parametrisierbare Automatisierungstechnikgerät 100 in einen durch den Speicher 101 und die eine Nahfeldkommunikationsschnittelle umfassende drahtlose Kommunikationsschnittstelle 103 gebildeten Nahfeldkommunikationsspeicher oder ein NFC-EEPROM über Nahfeldkommunikation oder per Funk geschrieben und/oder gelesen und der Nahfeldkommunikationsspeicher oder das NFC-EEPROM gleichzeitig mit elektrischer Energie versorgt werden, wobei beim Beschreiben und/oder beim Auslesen keine Überprüfung auf Datenübermittlungsfehler durchgeführt wird.

Gemäß einer weiteren Ausführungsform können in der Kommunikationspartition des Speichers 101 Kommunikations-Bytes festgelegt werden, über welche signalisiert wird, ob der vorgespeicherte Geräteparameter aktualisiert wurde oder die Aktualisierungsdaten übernommen wurden. Die Kommunikationspartition kann ferner in einem deaktivierten Zustand des parametrisierbaren Automatisierungstechnikgerätes 100 ausgelesen werden, um die Kommunikations-Bytes zu erhalten. Hierzu kann das parametrisierbare Automatisierungstechnikgerät 100 ausgebaut, beispielsweise aus einem Schaltschrank ausgebaut, sein.

Gemäß einer weiteren Ausführungsform kann das parametrisierbare Automatisierungstechnikgerät 100 drahtlos über eine Nahfeldkommunikationsschnittstelle, welche in der drahtlosen Kommunikationsschnittstelle 103 umfasst sein kann, parametriert oder konfiguriert werden. Hierzu können Aktualisierungsdaten von einem Sender, wie einem Computer, einem Mobiltelefon oder einer Smartphone, in einen kostengünstigen nahfeldkommunikationsfähigen Speicher, wie den Speicher 101, geschrieben werden. Die empfangenen Aktualisierungsdaten können von dem Prozessor 105 oder einem Mikroprozessor in dem parametrisierbaren Automatisierungstechnikgerät 100 überprüft werden, beispielsweise auf Datenübermittlungsfehler. Ferner können die empfangenen Aktualisierungsdaten und/oder ein Ergebnis der Überprüfung der empfangenen Aktualisierungsdaten an den Sender übermittelt oder zurückgemeldet werden. Hierzu kann der Prozessor 105 oder ein Mikroprozessor mit elektrischer Energie versorgt werden, beispielsweise über eine elektrische Energieversorgung des parametrisierbaren Automatisierungstechnikgerätes 100 oder eine Batterie. Ferner kann bei einer drahtlosen Versorgung der drahtlosen Kommunikationsschnittstelle 103 mit elektrischer Energie der Prozessor 105 durch die drahtlose Kommunikationsschnittstelle 103 mit elektrischer Energie versorgt werden.

Gemäß einer weiteren Ausführungsform kann für eine Parametrierung oder eine Konfiguration des parametrisierbaren Automatisierungstechnikgerätes 100 mit einem durch den Speicher 101 und die eine Nahfeldkommunikationsschnittelle umfassende drahtlose Kommunikationsschnittstelle 103 gebildeten Nahfeldkommunikationsspeicher oder einem NFC-EEPROM eine drahtlose Kommunikation mit einem Nahfeldkommunikationssender aufgebaut werden, indem beispielsweise Fehler in der Parametrierung oder Konfiguration zurückgemeldet werden können. Hierbei kann die Parametrierung oder die Konfiguration des parametrisierbaren Automatisierungstechnikgerätes 100 in einem deaktivierten Zustand des parametrisierbaren Automatisierungstechnikgerätes 100 ohne Energieversorgung des parametrisierbaren Automatisierungstechnikgerätes 100 erfolgen.

Gemäß einer weiteren Ausführungsform kann während eines Betriebes des parametrisierbaren Automatisierungstechnikgerätes 100 eine Kommunikation zwischen dem parametrisierbaren Automatisierungstechnikgerät 100 und dem Sender mittels Nahfeldkommunikation nicht vorgesehen sein, da eine Nahfeldkommunikation durch Störaussendungen oder eine Funktionalität der drahtlosen Kommunikationsschnittstelle 103 oder des Speichers 101 bei hohen Temperaturen, beispielsweise bei Temperaturen über 70°C, beeinträchtigt sein kann. Ferner kann bei einer engen Platzierung einer Mehrzahl von parametrisierbaren Automatisierungstechnikgeräten 100 ein Identifizieren eines einzelnen parametrisierbaren Automatisierungstechnikgerätes 100 aus der Mehrzahl der parametrisierbaren Automatisierungstechnikgeräte 100 zur individuellen Parametrierung erschwert werden.

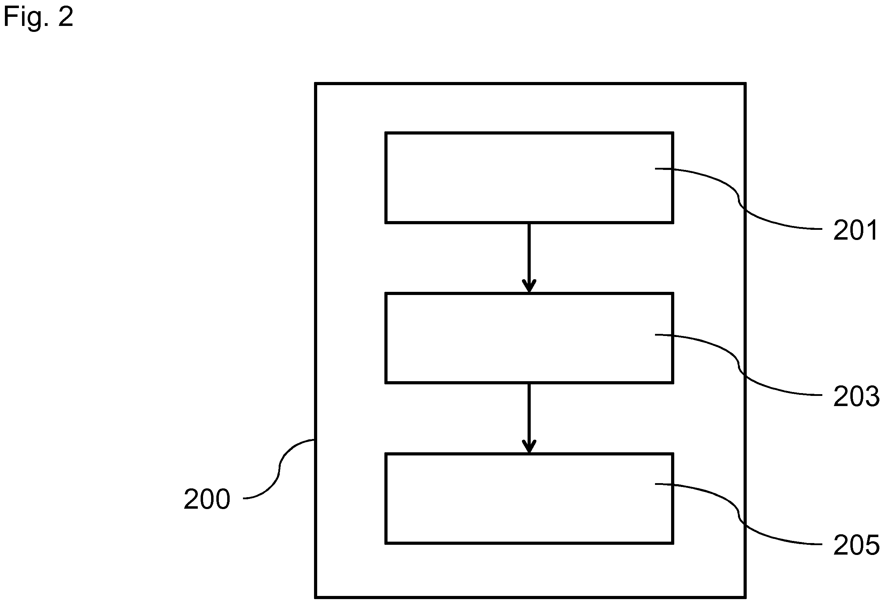

Fig. 2 zeigt ein schematisches Diagramm eines Verfahrens 200 zur Parametrierung eines parametrisierbaren Automatisierungstechnikgerätes 100 gemäß einer Ausführungsform. Das Verfahren 200 umfasst die Verfahrensschritte eines drahtlosen Übertragens 201, eines Aktualisierens 203 und eines Einstellens 205.

Das Verfahren 200 zur Parametrierung des parametrisierbaren Automatisierungstechnikgerätes 100 kann die nachfolgenden Verfahrensschritte umfassen: drahtloses Übertragen 201 von Aktualisierungsdaten zur Aktualisierung eines vorgespeicherten Geräteparameters des parametrisierbaren Automatisierungstechnikgerätes 100 an das parametrisierbar Automatisierungstechnikgerät 100 über ein Kommunikationsnetzwerk; Aktualisieren 203 des vorgespeicherten Geräteparameters auf der Basis der empfangenen Aktualisierungsdaten; und Einstellen 205 eines Betriebs des parametrisierbaren Automatisierungstechnikgerätes 100 auf der Basis des aktualisierten Geräteparameters.

Das Verfahren 200 kann mittels des in Fig. 1 gezeigten parametrisierbaren Automatisierungstechnikgerät 100 und einem Kommunikationsgerät zum Übermitteln der Aktualisierungsdaten an das parametrisierbare Automatisierungstechnikgerät 100 ausgeführt werden. Das Kommunikationsgerät kann ein Computer, ein Mobiltelefon oder ein Smartphone sein.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Parametrisierbares Automatisierungstechnikgerät
- 101: Speicher
- 103: Drahtlose Kommunikationsschnittstelle
- 105: Prozessor

- 200: Verfahren
- 201: Drahtloses Übertragen
- 203: Aktualisieren
- 205: Einstellen

## Patentansprüche

1. Parametrisierbares Automatisierungstechnikgerät (100), mit:
einem Speicher (101), in welchem ein Geräteparameter des parametrisierbaren Automatisierungstechnikgerätes (100) vorgespeichert ist;
einer drahtlosen Kommunikationsschnittstelle (103) zum Empfangen von Aktualisierungsdaten zur Aktualisierung des vorgespeicherten Geräteparameters über ein Kommunikationsnetzwerk; und
einem Prozessor (105), welcher ausgebildet ist, den vorgespeicherten Geräteparameter auf der Basis der empfangenen Aktualisierungsdaten zu aktualisieren und einen Betrieb des parametrisierbaren Automatisierungstechnikgerätes (100) auf der Basis des aktualisierten Geräteparameters einzustellen,
**dadurch gekennzeichnet, dass** der Speicher (101) in eine Datenpartition und eine Kommunikationspartition partitioniert ist, wobei die Datenpartition und die Kommunikationspartition derart konfiguriert sind, sodass in der Datenpartition der vorgespeicherte Geräteparameter, der aktualisierte Geräteparameter und/oder die Aktualisierungsdaten gespeichert werden können, und in der Kommunikationspartition eine Information über ein Empfangen der Aktualisierungsdaten gespeichert werden kann,
der Prozessor (105) ausgebildet ist, ein Empfangen der Aktualisierungsdaten durch ein Auslesen der Information über das Empfangen der Aktualisierungsdaten aus der Kommunikationspartition des Speichers zu erkennen, und die in der Kommunikationspartition gespeicherte Information über ein Empfangen der Aktualisierungsdaten zu löschen oder zu überschreiben, wobei der Prozessor (105) ferner ausgebildet ist, die empfangenen Aktualisierungsdaten auf Datenübermittlungsfehler zu überprüfen, und die empfangenen Aktualisierungsdaten bei Vorliegen eines Datenübermittlungsfehlers zu verwerfen.

2. Parametrisierbares Automatisierungstechnikgerät (100) nach Anspruch 1, wobei der Prozessor (105) ferner ausgebildet ist, eine Information über einen vorliegenden Datenübermittlungsfehler in dem Speicher (101) zu speichern.

3. Parametrisierbares Automatisierungstechnikgerät (100) nach Anspruch 1 oder 2, wobei die drahtlose Kommunikationsschnittstelle (103) ausgebildet ist, eine Information über einen vorliegenden Datenübermittlungsfehler über das Kommunikationsnetzwerk auszusenden oder für ein Auslesen bereitzustellen.

4. Parametrisierbares Automatisierungstechnikgerät (100) nach einem der vorstehenden Ansprüche, wobei das parametrisierbare Automatisierungstechnikgerät (100) eines der folgenden Automatisierungstechnikgeräte ist: ein Spannungsversorgungsgerät, ein Stromversorgungsgerät, ein Verstärker, insbesondere ein Messverstärker, ein Trennschalter, ein Aktor oder ein Sensor.

5. Parametrisierbares Automatisierungstechnikgerät (100) nach einem der vorstehenden Ansprüche, wobei der Geräteparameter einen oder mehrere der folgenden Geräteparameter umfasst: eine Ausgangsspannung, einen Ausgangsstrom, einen Verstärkungsfaktor oder einen Schaltzustand.

6. Parametrisierbares Automatisierungstechnikgerät (100) nach einem der vorstehenden Ansprüche, wobei die drahtlose Kommunikationsschnittstelle (103) ferner ausgebildet ist, eine Kennung des parametrisierbaren Automatisierungstechnikgerätes (100) über das Kommunikationsnetzwerk an ein Kommunikationsgerät auszusenden.

7. Parametrisierbares Automatisierungstechnikgerät (100) nach einem der vorstehenden Ansprüche, wobei die drahtlose Kommunikationsschnittstelle (103) drahtlos mit elektrischer Energie versorgbar ist.

8. Parametrisierbares Automatisierungstechnikgerät (100) nach einem der vorstehenden Ansprüche, wobei die drahtlose Kommunikationsschnittstelle (103) ferner ausgebildet ist, den Speicher mit elektrischer Energie zu versorgen.

9. Parametrisierbares Automatisierungstechnikgerät (100) nach einem der vorstehenden Ansprüche, wobei die drahtlose Kommunikationsschnittstelle (103) eine Nahfeldkommunikationsschnittstelle umfasst.

10. Parametrisierbares Automatisierungstechnikgerät (100) nach einem der vorstehenden Ansprüche, wobei die drahtlose Kommunikationsschnittstelle (103) innerhalb eines Gehäuses des parametrisierbaren Automatisierungstechnikgerätes (100) oder in einer Wandung des Gehäuses des parametrisierbaren Automatisierungstechnikgerätes (100) angeordnet ist.

11. Parametrisierbares Automatisierungstechnikgerät (100) nach einem der vorstehenden Ansprüche, wobei die drahtlose Kommunikationsschnittstelle (103) eine Antenne umfasst, welche innerhalb eines Gehäuses des parametrisierbaren Automatisierungstechnikgerätes (100) angeordnet oder in einer Wandung des Gehäuses des parametrisierbaren Automatisierungstechnikgerätes (100) integriert ist.

12. Verfahren (200) zur Parametrierung eines parametrisierbaren Automatisierungstechnikgerätes (100), mit:
drahtlosem Übertragen (201) von Aktualisierungsdaten zur Aktualisierung eines vorgespeicherten Geräteparameters des parametrisierbaren Automatisierungstechnikgerätes (100) an das parametrisierbar Automatisierungstechnikgerät (100) über ein Kommunikationsnetzwerk;
Aktualisieren (203) des vorgespeicherten Geräteparameters auf der Basis der empfangenen Aktualisierungsdaten durch einen, im parametrisierbaren Automatisierungstechnikgerät umfassenden Prozessor (105);
Einstellen (205) eines Betriebs des parametrisierbaren Automatisierungstechnikgerätes (100) durch den Prozessor (105) auf der Basis des aktualisierten Geräteparameters;
**gekennzeichnet durch**
Speichern des vorgespeicherten Geräteparameters, des aktualisierten Geräteparameters und/oder der Aktualisierungsdaten in einer Datenpartition eines Speichers des parametrisierbaren Automatisierungstechnikgerätes und Speichern einer Information über ein Empfangen der Aktualisierungsdaten in einer Kommunikationspartition des Speichers;
Erkennen eines Empfangens der Aktualisierungsdaten durch ein Auslesen der Information über das Empfangen der Aktualisierungsdaten aus der Kommunikationspartition des Speichers durch den Prozessor (105), und Löschen oder Überschreiben der in der Kommunikationspartition gespeicherten Information über ein Empfangen der Aktualisierungsdaten durch den Prozessor (105);Überprüfen der empfangenen Aktualisierungsdaten auf Datenübermittlungsfehler; und
Verwerfen der empfangenen Aktualisierungsdaten bei Vorliegen eines Datenübermittlungsfehlers.

13. Verfahren (200) nach Anspruch 12, mit:
Speichern einer Information über einen vorliegenden Datenübermittlungsfehler in einem Speicher (101) des parametrisierbaren Automatisierungstechnikgerätes (100).

## Claims

1. Parameterizable automation technology device (100), with:
a memory (101) in which a device parameter of the parameterizable automation technology device (100) is pre-stored;
a wireless communication interface (103) for receiving update data for updating the prestored device parameter through a communication network; and
a processor (105) configured to update the prestored device parameter based on the received update data and to set operation of the parameterizable automation technology device (100) based on the updated device parameter,
**characterized in that**
the memory (101) is partitioned into a data partition and a communication partition, wherein the data partition and the communication partition are configured, so that the prestored device parameter, the updated device parameter and/or the update data can be stored in the data partition, and information about receiving the update data can be stored in the communication partition,
the processor (105) being adapted to detect receiving the update data by reading out the information about receiving the update data from the communication partition of the memory, and to erase or overwrite the information stored in the communication partition about receiving the update data, wherein the processor (105) is further adapted to check the received update data for data transmission errors, and to discard the received update data in the presence of a data transmission error.

2. Parameterizable automation technology device (100) of claim 1, wherein the processor (105) is further configured to store information about a present data communication error in the memory (101).

3. Parameterizable automation technology device (100) according to claim 1 or 2, wherein the wireless communication interface (103) is configured to send information about a present data transmission error through the communication network or to be ready for reading.

4. Parameterizable automation technology device (100) according to any one of the preceding claims, wherein the parameterizable automation technology device (100) one of the following automation technology devices: a voltage supply device, a current supply device, an amplifier, in particular a measuring amplifier, a circuit breaker, an actuator or a sensor.

5. The parameterizable automation technology device (100) according to one of the preceding claims, wherein the device parameter comprises one or more of the following device parameters: an output voltage, an output current, an amplification factor or a switching state.

6. Parameterizable automation technology device (100) according to any one of the preceding claims, wherein the wireless communication interface (103) is further configured to emit an identifier of the programmable automation technology device (100) through the communication network to a communication device.

7. Parameterizable automation technology device (100) according to any one of the preceding claims, wherein the wireless communication interface (103) can be supplied with electrical energy wirelessly.

8. Parameterizable automation technology device (100) according to one of the preceding claims, wherein the wireless communication interface (103) is further configured to supply the memory with electrical energy.

9. Parameterizable automation technology device (100) according to one of the preceding claims, wherein the wireless communication interface (103) comprises a near-field communication interface.

10. Parameterizable automation technology device (100) according to any one of the preceding claims, wherein the wireless communication interface (103) is arranged within a housing of the parameterizable automation technology device (100) or within a wall of the housing of the parameterizable automation technology device (100).

11. Parameterizable automation technology device (100) according to any one of the preceding claims, wherein the wireless communication interface (103) comprises an antenna which is arranged within a housing of the parameterizable automation technology device (100) or is integrated in a wall of the housing of the parameterizable automation technology device (100).

12. Method (200) for parameterizing a parameterizable automation technology device (100), comprising:
wireless transmission (201) of update data for updating a prestored device parameter of the parameterizable automation technology device (100) to the parameterizable automation technology device (100) through a communication network;
Updating (203) the prestored device parameter based on the received update data by a processor (105), which is comprised by the parameterizable automation technology device (100);
Setting (205) an operation of the programmable automation device (100) based on the updated device parameter by the processor (105);
**characterized by**
Storing the prestored device parameter, the updated device parameter, and/or the update data in a data partition of a memory of the programmable automation device and storing information about receiving the update data in a communication partition of the memory;
Detecting receiving the update data by reading out the information about receiving the update data from the communication partition of the memory by the processor (105), and deleting or overwriting the information stored in the communication partition about receiving the update data by the processor (105); Checking the received update data for data transmission errors; and
Discarding the received update data in the presence of a data transmission error.

13. The method (200) of claim 12, comprising:
Storing information about a present data transmission error in a memory (101) of the parameterizable automation technology device (100).

## Revendications

1. Dispositif de technologie d'automatisation paramétrable (100) comprenant :
une mémoire (101) dans laquelle un paramètre du dispositif de technologie d'automatisation paramétrable (100) est préalablement mémorisé ;
une interface de communication sans fil (103) destinée à recevoir des données d'actualisation destinées à actualiser le paramètre de dispositif préalablement mémorisé sur un réseau de communication ; et
un processeur (105) qui est conçu pour actualiser les paramètres de dispositif préalablement mémorisés sur la base des données d'actualisation reçues et pour régler le fonctionnement du dispositif de technologie d'automatisation paramétrable (100) sur la base des paramètres de dispositif actualisés,
**caractérisé en ce que**
la mémoire (101) est partitionnée en une partition de données et une partition de communication, la partition de données et la partition de communication étant configurées de telle sorte que le paramètre de dispositif préalablement mémorisé, le paramètre de dispositif actualisé et/ou les données d'actualisation peuvent être mémorisés dans la partition de données, et une information sur la réception des données d'actualisation peut être mémorisée dans la partition de communication,
le processeur (105) étant conçu pour détecter la réception des données d'actualisation en lisant l'information sur la réception des données d'actualisation dans la partition de communication de la mémoire, et pour supprimer ou écraser l'information mémorisée dans la partition de communication et relative à la réception des données d'actualisation, le processeur (105) étant en outre conçu pour vérifier les données d'actualisation reçues afin de rechercher des erreurs de transmission de données et pour rejeter les données d'actualisation reçues en présence d'une erreur de transmission de données.

2. Dispositif de technologie d'automatisation paramétrable (100) selon la revendication 1, le processeur (105) étant en outre conçu pour mémoriser dans la mémoire (101) une information sur une erreur de transmission de données existante.

3. Dispositif de technologie d'automatisation paramétrable (100) selon la revendication 1 ou 2, l'interface de communication sans fil (103) étant conçue pour envoyer une information sur une erreur de transmission de données existante sur le réseau de communication ou pour la rendre disponible à une lecture.

4. Dispositif de technologie d'automatisation paramétrable (100) selon l'une des revendications précédentes, le dispositif de technologie d'automatisation paramétrable (100) étant l'un des dispositifs de technologie d'automatisation suivants : un dispositif d'alimentation en tension, un dispositif d'alimentation en courant, un amplificateur, en particulier un amplificateur de mesure, un sectionneur, un actionneur ou un capteur.

5. Dispositif de technologie d'automatisation paramétrable (100) selon l'une des revendications précédentes, le paramètre de dispositif comprenant l'un au moins des paramètres de dispositif suivants : une tension de sortie, un courant de sortie, un facteur d'amplification ou un état de commutation.

6. Dispositif de technologie d'automatisation paramétrable (100) selon l'une des revendications précédentes, l'interface de communication sans fil (103) étant en outre conçue pour envoyer un identifiant du dispositif de technologie d'automatisation paramétrable (100) à un dispositif de communication sur le réseau de communication.

7. Dispositif de technologie d'automatisation paramétrable (100) selon l'une des revendications précédentes, l'interface de communication sans fil (103) pouvant être alimentée sans fil en énergie électrique.

8. Dispositif de technologie d'automatisation paramétrable (100) selon l'une des revendications précédentes, l'interface de communication sans fil (103) étant en outre conçue pour alimenter la mémoire en énergie électrique.

9. Dispositif de technologie d'automatisation paramétrable (100) selon l'une des revendications précédentes, l'interface de communication sans fil (103) comprenant une interface de communication en champ proche.

10. Dispositif de technologie d'automatisation paramétrable (100) selon l'une des revendications précédentes, l'interface de communication sans fil (103) étant disposée à l'intérieur d'un boîtier du dispositif de technologie d'automatisation paramétrable (100) ou dans une paroi du boîtier du dispositif de technologie d'automatisation paramétrable (100).

11. Dispositif de technologie d'automatisation paramétrable (100) selon l'une des revendications précédentes, l'interface de communication sans fil (103) comprenant une antenne qui est disposée à l'intérieur d'un boîtier du dispositif de technologie d'automatisation paramétrable (100) ou intégrée dans une paroi du boîtier du dispositif de technologie d'automatisation paramétrable (100).

12. Procédé (200) de paramétrage d'un dispositif de technologie d'automatisation paramétrable (100), le procédé comprenant :
la transmission sans fil (201) de données d'actualisation pour actualiser un paramètre de dispositif préalablement mémorisé du dispositif de technologie d'automatisation paramétrable (100) au dispositif de technologie d'automatisation paramétrable (100) sur un réseau de communication ;
l'actualisation (203) du paramètre de dispositif préalablement mémorisé sur la base des données d'actualisation reçues par un processeur (105) prévu dans le dispositif de technologie d'automatisation paramétrable ;
le réglage (205) du fonctionnement du dispositif de technologie d'automatisation paramétrable (100) à l'aide du processeur (105) sur la base du paramètre de dispositif actualisé ;
**caractérisé par**
la mémorisation du paramètre de dispositif préalablement mémorisé, du paramètre de dispositif actualisé et/ou des données d'actualisation dans une partition de données d'une mémoire du dispositif de technologie d'automatisation paramétrable et la mémorisation d'une information sur la réception des données d'actualisation dans une partition de communication de la mémoire ;
la détection de la réception des données d'actualisation par lecture de l'information sur la réception des données d'actualisation dans la partition de communication de la mémoire par le processeur (105), et la suppression ou l'écrasement de l'information mémorisée dans la partition de communication à la réception des données d'actualisation par le processeur (105) ; la vérification des données d'actualisation reçues pour rechercher des erreurs de transmission de données ; et
le rejet des données d'actualisation reçues en présence d'une erreur de transmission de données.

13. Procédé (200) selon la revendication 12, comprenant :
la mémorisation d'une information sur une erreur de transmission de données existante dans une mémoire (101) du dispositif de technologie d'automatisation paramétrable (100).
